# EUROPEAN PATENT SPECIFICATION

(11) **EP 3 452 382 B1**
(45) Date of publication and mention of the grant of the patent: **07.04.2021**
(21) Application number: 17792569.0
(22) Date of filing: 27.04.2017
(51) Int. Cl.: B65D 3/00, B32B 29/00, B65D 65/40, B65D 65/42, D21H 19/22, B32B 27/10

(54) **DISPOSABLE BOARD CONTAINER AND USES OF BOARD**
WEGWERFBARER KARTONBEHÄLTER UND VERWENDUNGEN VON KARTON
CONTENEUR EN CARTON JETABLE ET UTILISATIONS DE CARTON

(30) Priority: 03.05.2016 SE 1650597
(43) Date of publication of application: 13.03.2019
(73) Proprietor: Stora Enso Oyj, 00101 Helsinki (FI)
(72) Inventor: RIBU, Ville, 53100 Lappeenranta (FI)
(74) Representative: Steinrud, Henrik
(86) International application number: PCT/IB2017/052434
(87) International publication number: WO 2017/191535

(56) References cited:
- WO-A1-83/01067
- WO-A1-83/01067
- WO-A1-2005/077768
- WO-A1-2009/153389
- WO-A1-2010/098856
- WO-A1-2012/110351
- JP-A- 2003 095 350
- JP-A- 2012 062 099
- JP-A- 2014 058 336
- US-A- 5 196 269
- US-A1- 2004 082 723
- US-A1- 2007 292 569
- US-A1- 2007 292 569
- US-A1- 2010 273 017
- US-A1- 2010 310 890

## Description

### Technical field

The invention relates to a disposable board container, such as a drinking cup or a food tray. The container comprises a bottom and a mantle extending upwards therefrom. The bottom and the mantle are made from a polymer coated fibrous board such as paperboard or cardboard and joined by heat-sealing. A liquid-proof coating of polymer is provided at least on the inner surfaces of the container.

### Background

The material for a disposable board cup is fibrous board, which on one or both sides is extrusion-coated with a heat-sealable liquid-barrier polymer. Bottom blanks and mantle blanks are cut by punches from board webs. A circumferential downward rim is moulded to each bottom blank with a compression-moulding press. The mantle blanks are wound about a conical moulding tool and heat-sealed along an upward seam line by means of the coating polymer to form mantle parts having the shape of a truncated cone. If the board is polymer-coated on one side only, the coating will form the upper surface of the moulded bottom and the inner surface of the sealed mantle. Next, the bottom and the mantle are fitted together and the lower edge of the mantle is bent and heat-sealed by the coating polymer against the circumferential rim surrounding the bottom. The seals secure liquid-tightness for the cup. Finally, the upper edge of the mantle is usually bent to form a mouth roll for adding rigidity to the cup and providing the desired mouth feel in drinking.

Descriptions of standard techniques for the manufacture of disposable board cups are found e.g. from WO 2005/077768 A1, see especially Figure 7, and WO 2009/153389 A1, see Figures 3 and 4.

Open containers of a basically similar structure, comprising heat-sealed bottom and mantle parts, such as circular, oval or rectangular food trays, are manufactured in a substantially like manner.

For disposable drinking cups the usual coating polymer is low-density polyethylene (LDPE), which has a low cost as well as excellent extrusion and heat-sealing properties. However, for microwave-oven use LDPE has too low a melting point. Microwave-ovenable food-trays have been manufactured by using a coating polymer, in which a minor share of polyethylene (PE) has been blended with a major share of polypropylene (PP), which has a higher melting point so as to stand heating in a microwave-oven without melting. Generally such a blend seeks to balance between the simultaneous runnability in extrusion coating, heat-sealability and microwave-ovenability requirements. An example of a commercial coating blend, which is PE modified PP and specifically designed for extrusion coating, is WG341C by Borealis AG.

A problem experienced in heat-sealed PE+PP-blend coated micro-ovenable containers is inadequate sealing between the lower edge of the mantle and the downward rim of the bottom. The heat-sealing jaws have to clamp together a stack of three board layers and polymer coating layers sandwiched therebetween along the circumferential seam being formed. Fibrous board such as paperboard or cardboard has a poor heat conductivity, and the presence of a third board layer considerably limits transfer of heat to the polymeric seals as compared to the usual situation with two board layers at the seam.

US 2007/0292569 A1 to Bohme et al describes various polymer coated packaging boards for oily or greasy food products. A board substrate may have an inner oil resistant coating layer of a blend of PE and PP, and an outer heat-seal layer of PP. However, the cited PP homopolymer MARLEX by Chevron Phillips or the metallocene polypropylene Affinity 1450 by Dow Chemical respectively have a too high or a too low melting point for solving the heat-sealing problem between a the bottom and the mantle of a microwave-ovenable container. Heat-sealed microwave-ovenable containers are not dealt with by Bohme et al either.

WO8301067 describes a polyolefin composition particularly useful for extrusion coating; the composition may comprise PP-c. There is thus a need for an improved heat-sealed container especially for microwave oven use, in which a leak-free seal between the bottom and mantle parts is secured.

### Summary of the invention

According to the invention the problem of improving the container is solved by use of a polymer-coated fibrous board material for the bottom and the mantle of the container, which comprises (i) a fibrous board base, (ii) an extruded inner coating layer of a blend of polyethylene (PE) and polypropylene (PP), and (iii) an extruded outer coating layer of a polypropylene-olefin copolymer (PP-c). The inner coating layer is located between the fibrous board base and the outer coating layer.

Tests carried out by the inventors have demonstrated that the coextruded double-layer coating heat-seals considerably better than the monolayer coating of a blend of PE and PP according to the prior art. Commercial isotactic PP homopolymer, as well as the PE+PP blend WG341C, have melting points of about 160°C, whereas copolymerization of propylene with ethylene lowers the melting point drastically, to about 130°C by a share of mere 4 % of ethylene monomer. The lower melting point as such indicates improved heat-sealability. At the same time the melting point is still higher than that of LDPE and sufficient for microwave-ovenable products.

Propylene homopolymers and copolymers as such are ill-suited for extrusion coating onto fibrous substrates such as paperboard or cardboard, which is due to poor adhesion to fibrous materials. In fact PP homopolymers and copolymers have been developed for film extrusion, and usually the resulting films are biaxially oriented and used e.g. for the manufacture of plastic bags.

The solution according to the invention, however, is to use the blend of PE and PP as a coextruded inner tie layer, which provides good adhesion to the fibrous substrate and at the same time binds the coextruded PP-c layer as an outer heat-seal layer to the double-layer structure. Successful testing of the invention has been carried out with paperboard provided with an extruded inner coating layer of a blend of PE and PP and a coextruded outer coating layer of a film grade propylene alpha olefin copolymer. Surprisingly the copolymer, developed for film extrusion and free from pure PE, turned out to have good runnability in extrusion coating as well. Furthermore, in extrusion coating the temperature is markedly higher than in standard film extrusion and, without limiting the invention to this theory, it is supposed that slight oxidation of PP-c due to this high extrusion temperature is conducive to the improved heat-sealability.

Preferably the polypropylene (PP) in the inner coating layer is propylene homopolymer. The polymer blend of the inner layer may contain about 20 to 50 wt-% of PE, which is preferably LDPE, and about 50 to 80 wt-% of PP.

The weight of the inner coating layer may be 5 to 15 g/m², preferably about 10 g/m², and the weight of the outer coating layer may be 5 to 15 g/m², preferably about 10 g/m².

Even the outer surface of the container may be provided with at least one heat-sealable coating layer of PP-c or a blend of PE and PP. Hereby the inner and outer surfaces of the container can be similarly coated with double layers of polymer.

The fibrous board base may be paperboard with a weight of 170-250 g/m², which is particularly suitable for drinking cup sized and shaped containers. However, the board base may even be cardboard of a weight of about 250-500 g/m², which suits for larger and stiffer food trays.

The containers according to the invention thus include microwave-ovenable food trays. Another useful embodiment of the invention is a disposable drinking cup, which stands heating in a microwave oven.

The invention even covers use of a board comprising a fibrous board base, an extruded inner coating layer of a blend of polyethylene (PE) and polypropylene (PP), and an extruded outer coating layer of propylene copolymer (PP-c) for the manufacture of heat-sealed disposable drinking cups or heat-sealed microwave-ovenable food trays.

### Brief description of the drawings

Reference is made to the enclosed drawing, in which
Fig. 1 shows a paperboard drinking cup in a partially sectional view,
Fig. 2 is a sectional view of the heat-sealed joint between the bottom and mantle of the cup according to the prior art,
Fig. 3 is a sectional view of the joint between the bottom and mantle of the cup according to the invention,
Fig. 4 is a sectional view of the polymer coated board used for the cup as shown in Figs. 1 and 3, and
Figs. 5 and 6 show two further embodiments of boards useful for cups according to the invention.

### Detailed description

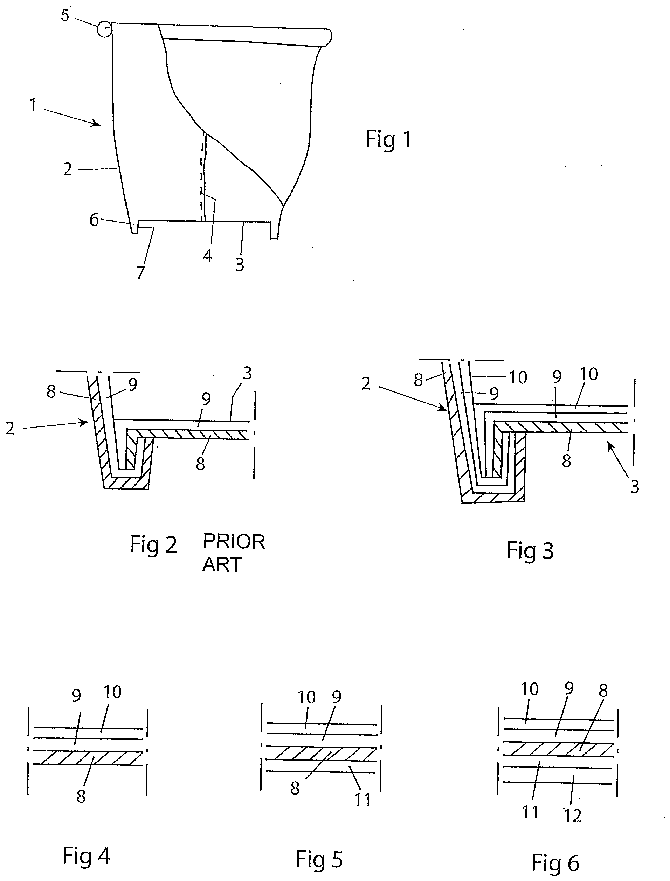

Fig. 1 shows a drinking cup 1 made from a polymer coated fibrous material, such as paperboard. The cup 1, which has the conventional basic configuration, comprises a mantle 2 shaped as a truncated cone and a circular flat bottom 3. The mantle 2 has an upright seal 4, and the bottom 3 is sealed together with the mantle along its circumference. At the upper end of the mantle 2 a bead or a mouth roll 5 running around the mouth of the cup has been formed by mechanical moulding with the aid of heat and moisture. If desired, a separate lid may be provided for closing the mouth of the cup, for instance such as described in WO 2005/077768 A1.

The mantle 2 and the bottom 3 of the cup have a coating of polymer at least on the inner surfaces of the cup 1. The coating is liquid-tight, shielding the board base against wetting and enabling liquid-proof non-leaking sealing of the parts 2, 3. Preferably the drinking cup 1 has a polymer coating also on its outer surfaces.

As seen in Fig. 1, a circumferential downward rim 6 has been formed to the bottom 3 of the cup 1 by means of a compression-moulding press. The lower end of the mantle 2 has been bent accordingly to form an upward rim 7, forming a narrow track which fits the downward rim 6 of the bottom 3. Heat-sealing of the adjacent triple board layers at the lower end of the cup by means of the coating polymer seals the cup from its bottom.

The heat-sealed joint between the bottom 3 and the mantle 2 of the cup is shown in an enlarged scale in Figs. 2 and 3. In Fig. 2, which represents the prior art, the material for both the bottom 3 and mantle 2 parts of the cup comprises a paperboard base 8 and a monolayer coating 9 of a blend of PE and PP. Typically the weight of the board base 8 is about 170-250 g/m² and the weight of the polymer coating 9 is about 20 g/m². At the heat seal adjacent coating layers 9 of said blend are sealed together, but as noted already, the seal between PE+PP layers tends to be deficient due to the middlemost board layer belonging to the bottom 3 restricting conduction of heat to the seal area.

In Fig. 3, which represents the invention, the material for both the bottom 3 and mantle 2 parts of the cup comprises a paperboard base 8 and a coextruded double layer coating, in which the inner layer 9 comprises a blend of PE and PP and the outer layer 10 comprises a propylene copolymer (PP-c). Suitable weights are 170-250 g/m² for the board base 8, 5-15 g/m² for the inner coating layer 9, and 5-15 g/m² for the outer coating layer 10. Each inner coating layer 9 secures an excellent adhesion to the paperboard base 8 and the adjacent heat-sealed outer coating layers 10 form a liquid-proof seal between the bottom 3 and mantle 2 parts of the cup.

Fig. 4 is a sectional view of the triple-layer 8, 9, 10 material for the cup as shown in Fig. 3. Figs. 5 and 6 are sectional views of two further cup materials suitable for use in the invention. In both cases the double layer coating 9, 10 for the inner surfaces of the cup is the same as in Figs. 3 and 4. However, in Fig. 5 the reverse side of the material forming the outer surface of the cup is provided with a monolayer coating 11 of a blend of PE and PP, suitably of a weight of 10-20 g/m². In Fig. 6 the reverse side of the material forming the outer surface of the cup is provided with a double layer coating of an inner layer 11 of PE+PP and an outer layer 12 of PP-c, preferably so that the material is similarly polymer coated on both sides.

The cup 1 according to the invention as depicted in Figs. 1 and 3-6 is suitable for heating in a microwave oven and works as a drinking cup as well as a premade food container closed with a peelable lid of paper, plastic or metal. The cup could be modified to a food tray of a round, oval or rectangular configuration without changing its basic structure. In general any modifications within the metes and bounds of the appended claims belong to the scope of the invention as described herein.

### Examples

Paperboard was extrusion coated by coextrusion of an inner layer of 10 g/m² of WG341C (a blend of PP and PE) and an outer layer of 10 g/m² of TD109CF (a propylene alfa olefin copolymer by Borealis AG developed for the manufacture of unoriented films in particular and having a reported melting point of 128-132°C). As a reference representing the prior art, the same paperboard was extrusion coated by a monolayer of 20 g/m² of WG341C. The coated materials were turned to cups of the type shown in Fig. 1 by heat-sealing, the material forming both the bottom and the mantle of the cup and the polymer coating being on the inner surfaces of the cup.

For the double-layer coated material according to the invention a heat-sealing temperature of 400°C was needed to achieve non-leaking heat-seal between the bottom and the mantle of the cup. For the monolayer coated reference material a heat-sealing temperature of 490°C was required for a seal, which was still of inferior quality.

A corresponding pair of coated materials was produced, in which both sides of the fibrous board base were identically coated, and the materials were turned to cups by heat-sealing. The required heat-sealing temperatures for a seal between the bottom and the mantle of the cup were 430°C (invention) and 530°C (prior art), respectively.

The heat-sealing temperatures are close to those needed for heat-sealing of conventional LDPE-coated cups, which means that advantageously the same sealing apparatus can be applied for cups according to the invention as for said conventional cups.

In view of the above detailed description of the present invention, other modifications and variations will become apparent to those skilled in the art. However, it should be apparent that such other modifications and variations may be effected without departing from the scope of the invention as defined by the claims.

## Claims

1. A disposable board container (1) comprising a bottom (3) and a mantle (2) extending upwards therefrom, said bottom and mantle being made from a polymer coated fibrous board and joined by heat-sealing, there being a coating of polymer (9, 10) at least on the inner surfaces of the container, **characterized in that** said board comprises:
(i) a fibrous board base (8),
(ii) an extruded inner coating layer (9) of a blend of polyethylene (PE) and polypropylene (PP), and
(iii) an extruded outer coating layer (10) of propylene-olefin copolymer (PP-c).

2. The container of claim 1, **characterized in that** the polypropylene (PP) in the inner coating layer (9) is propylene homopolymer.

3. The container of claim 1 or 2, **characterized in that** said blend of the inner layer (9) contains 20 to 50 wt-% of PE and 50 to 80 wt-% of PP.

4. The container of any one of the preceding claims, **characterized in that** the weight of the inner layer (9) is 5 to 15 g/m², preferably about 10 g/m², and the weight of the outer layer (10) is 5 to 15 g/m², preferably about 10 g/m².

5. The container of any one of the preceding claims, **characterized in that** the outer surface of the container (1) is provided with at least one heat-sealable coating layer (11, 12) of PP-c or a blend of PE and PP.

6. The container of claim 5, **characterized in that** the inner and outer surfaces of the container (1) are similarly coated with layers of polymer.

7. The container of any one of the preceding claims, which is a microwave-ovenable food tray.

8. The container of any one of claims 1 - 6, which is a disposable drinking cup (1).

9. Use of a heat-sealable fibrous board comprising
(i) a fibrous board base (8),
(ii) an extruded inner coating layer (9) of a blend of polyethylene (PE) and polypropylene (PP), and
(iii) an extruded outer coating layer (10) of propylene-olefin copolymer (PP-c)
for manufacture of heat-sealed disposable drinking cups (1).

10. Use of a heat-sealable fibrous board comprising
(i) a fibrous board base (8),
(ii) an extruded inner coating layer (9) of a blend of polyethylene (PE) and polypropylene (PP), and
(iii) an extruded outer coating layer (10) of propylene-olefin copolymer (PP-c)
for manufacture of heat-sealed microwave-ovenable food trays.

## Patentansprüche

1. Einwegpappbehälter (1), umfassend einen Boden (3) und einen sich davon nach oben erstreckenden Mantel (2), wobei besagter Boden und Mantel aus einer polymerbeschichteten Faserpappe bestehen und durch Heißversiegelung verbunden sind, wobei zumindest die Innenflächen des Behälters mit Polymer (9, 10) beschichtet sind, **dadurch gekennzeichnet, dass** besagte Pappe Folgendes umfasst:
(i) eine Faserplattenbasis (8),
(ii) eine extrudierte innere Deckschicht (9) aus einer Mischung aus Polyethylen (PE) und Polypropylen (PP), und
(iii) eine extrudierte äußere Deckschicht (10) aus Propylen-Olefin-Copolymer (PP-c).

2. Behälter nach Anspruch 1, **dadurch gekennzeichnet, dass** das Polypropylen (PP) in der inneren Deckschicht (9) Propylen-Homopolymer ist.

3. Behälter nach Anspruch 1 oder 2, **dadurch gekennzeichnet, dass** die Mischung der inneren Schicht (9) 20 bis 50 Gew.-% PE und 50 bis 80 Gew.-% PP enthält.

4. Behälter nach einem der vorhergehenden Ansprüche, **dadurch gekennzeichnet, dass** das Gewicht der inneren Schicht (9) 5 bis 15 g/m², vorzugsweise etwa 10 g/m², und das Gewicht der äußeren Schicht (10) 5 bis 15 g/m², vorzugsweise etwa 10 g/m², beträgt.

5. Behälter nach einem der vorhergehenden Ansprüche, **dadurch gekennzeichnet, dass** die Außenfläche des Behälters (1) mit zumindest einer heißsiegelfähigen Deckschicht (11, 12) aus PP-c oder einer Mischung aus PE und PP versehen ist.

6. Behälter nach Anspruch 5, **dadurch gekennzeichnet, dass** die Innen- und Außenflächen des Behälters (1) in ähnlicher Weise mit Polymerschichten beschichtet sind.

7. Behälter nach einem der vorhergehenden Ansprüche, der eine mikrowellengeeignete Lebensmittelschale ist.

8. Behälter nach einem der Ansprüche 1 - 6, der ein Einweg-Trinkbecher (1) ist.

9. Nutzung einer heißsiegelfähigen Faserplatte, umfassend
(i) eine Faserplattenbasis (8),
(ii) eine extrudierte innere Deckschicht (9) aus einer Mischung aus Polyethylen (PE) und Polypropylen (PP), und
(iii) eine extrudierte äußere Deckschicht (10) aus Propylen-Olefin-Copolymer (PP-c)
zur Herstellung von heißversiegelten Einweg-Trinkbechern (1).

10. Nutzung einer heißsiegelfähigen Faserplatte, umfassend
(i) eine Faserplattenbasis (8),
(ii) eine extrudierte innere Deckschicht (9) aus einer Mischung aus Polyethylen (PE) und Polypropylen (PP), und
(iii) eine extrudierte äußere Deckschicht (10) aus Propylen-Olefin-Copolymer (PP-c)
zur Herstellung von heißversiegelten, mikrowellengeeigneten Lebensmittelschalen.

## Revendications

1. Contenant de carton jetable (1) comprenant un fond (3) et un manteau (2) s'étendant vers le haut à partir de celui-ci, ledit fond et ledit manteau étant composés d'un carton fibreux revêtu de polymère et assemblés par thermosoudage, un revêtement de polymère (9, 10) étant présent au moins sur les surfaces internes du contenant, **caractérisé en ce que** ledit manteau comprend :
(i) une base de carton fibreux (8),
(ii) une couche de revêtement interne extrudée (9) d'un mélange de polyéthylène (PE) et de polypropylène (PP), et
(iii) une couche de revêtement externe extrudée (10) de copolymère de propylène-oléfine (PP-c).

2. Contenant selon la revendication 1, **caractérisé en ce que** le polypropylène (PP) dans la couche de revêtement interne (9) est un homopolymère de propylène.

3. Contenant selon la revendication 1 ou 2, **caractérisé en ce que** ledit mélange de la couche interne (9) contient 20 à 50 % en poids de PE et 50 à 80 % en poids de PP.

4. Contenant selon l'une quelconque des revendications précédentes, **caractérisé en ce que** le poids de la couche interne (9) est de 5 à 15 g/m², de préférence environ 10 g/m², et le poids de la couche externe (10) est de 5 à 15 g/m², de préférence environ 10 g/m².

5. Contenant selon l'une quelconque des revendications précédentes, **caractérisé en ce que** la surface externe du contenant (1) est pourvue d'au moins une couche de revêtement thermoscellable (11, 12) de PP-c ou d'un mélange de PE et de PP.

6. Contenant selon la revendication 5, **caractérisé en ce que** les surfaces interne et externe du contenant (1) sont revêtues de manière similaire avec des couches de polymère.

7. Contenant selon l'une quelconque des revendications précédentes, qui est un plateau alimentaire pouvant aller au four à micro-ondes.

8. Contenant selon l'une quelconque des revendications 1 à 6, qui est un gobelet à boisson jetable (1).

9. Utilisation d'un panneau fibreux thermoscellable comprenant
(i) une base de carton fibreux (8),
(ii) une couche de revêtement interne extrudée (9) d'un mélange de polyéthylène (PE) et de polypropylène (PP), et
(iii) une couche de revêtement externe extrudée (10) de copolymère de propylène-oléfine (PP-c)
pour la fabrication de gobelets à boisson jetables thermoscellés (1).

10. Utilisation d'un panneau fibreux thermoscellable comprenant
(i) une base de carton fibreux (8),
(ii) une couche de revêtement interne extrudée (9) d'un mélange de polyéthylène (PE) et de polypropylène (PP), et
(iii) une couche de revêtement externe extrudée (10) de copolymère de propylène-oléfine (PP-c)
pour la fabrication de plateaux alimentaires pouvant aller au four à micro-ondes thermoscellés.
